# EUROPÄISCHE PATENTSCHRIFT

(11) **EP 4 180 108 B1**
(45) Veröffentlichungstag und Bekanntmachung des Hinweises auf die Patenterteilung: **31.12.2025**
(21) Anmeldenummer: 21208017.0
(22) Anmeldetag: 12.11.2021
(51) Int. Cl.: B01D 33/21, B01D 33/23, B01D 33/48, B01D 33/74, B01D 35/16

(54) **VERFAHREN UND VORRICHTUNG ZUM FILTERN EINER SUSPENSION**
METHOD AND DEVICE FOR FILTERING A SUSPENSION
PROCÉDÉ ET DISPOSITIF DE FILTRAGE D'UNE SUSPENSION

(43) Veröffentlichungstag der Anmeldung: 17.05.2023
(73) Patentinhaber: Bokela GmbH, 76131 Karlsruhe (DE)
(72) Erfinder: HAHN, Jürgen, 76767 Hagenbach (DE); NEUMAIER, Klaus, 76275 Ettlingen (DE); EHRFELD, Egon, 76227 Karlsruhe (DE)
(74) Vertreter: Wunderlich & Heim Patentanwälte PartG mbB

(56) Entgegenhaltungen:
- WO-A1-2020/185484
- DE-A1- 3 616 201
- DE-C- 340 183

## Beschreibung

Die Erfindung betrifft ein Verfahren zum Filtern einer Suspension mit mindestens einem rotierenden Scheibenfilter, welcher eine Mehrzahl von Filtersegmenten aufweist, welche jeweils einen inneren Filtratraum umfassen und an einer Filterwelle mit mindestens einer Filtratleitung angebracht sind, welche leitungsverbunden mit den Filtraträumen der Filtersegmente ist, wobei der mindestens eine Scheibenfilter mit den Filtersegmenten zumindest einen Trog mit der Suspension durchlaufen und aufgrund einer anliegenden Druckdifferenz ein Filterkuchen an einem Filtermedium der Filtersegmente anfiltriert wird, wobei Filtrat in Filtraträume der Filtersegmente gelangt und über mindestens eine Filtratableitung an der Filterwelle abgeführt wird, und anschließend der anfiltrierte Filterkuchen auf dem Scheibenfilter eine Entfeuchtungszone durchläuft, gemäß dem Oberbegriff des Anspruchs 1.

Die Erfindung betrifft weiterhin eine Vorrichtung zum Filtern einer Suspension mit mindestens einem rotierenden Scheibenfilter, welcher eine Mehrzahl von Filtersegmenten aufweist, welche jeweils einen inneren Filtratraum umfassen und an einer Filterwelle mit mindestens einer Filtratableitung angebracht sind, welche leitungsverbunden mit den Filtraträumen der Filtersegmente ist, wobei die Vorrichtung derart ausgebildet ist, dass der mindestens eine Scheibenfilter mit den Filtersegmenten zunächst einen Trog mit einer Suspension durchlaufen und aufgrund einer anliegenden Druckdifferenz ein Filterkuchen an einem Filtermedium der Filtersegmente anfiltriert wird, wobei Filtrat in die Filterräume der Filtersegmente gelangt und über die mindestens eine Filtratableitung an der Filterwelle abgeführt wird, und anschließend der anfiltrierte Filterkuchen auf dem mindestens einen Scheibenfilter eine Entfeuchtungszone durchläuft, gemäß dem Oberbegriff des Anspruchs 10.

Drehfilter werden zur Filtration von Suspension in der Chemie und in der Aufbereitungsindustrie verbreitet eingesetzt. Das Spektrum der Suspensionseigenschaften ist breit. Es gibt schnell sedimentierende Suspensionen, die auch zügig filtrieren oder solche die so feinkörnig sind, dass keine Luft zur Entfeuchtung durch den Filterkuchen tritt. Der kapillare Eintrittsdruck wird durch die angelegte Druckdifferenz nicht überschritten.

Die Erfindung betrifft insbesondere Scheibenfilter, die zunehmend auch für feinkörnige Suspensionen, Abfallströme, dünne Schlämme, oft als Tailings bezeichnet, eingesetzt werden. Insbesondere dreht es sich um Einsatzfälle, bei denen eine Filtratabfuhr dadurch erschwert wird, dass der Filterkuchen aufgrund seiner Feinkörnigkeit keine oder nur sehr wenig Entfeuchtungsluft durchlässt. Die Scheibenfilter, die sowohl als Vakuumfilter als auch in einem Kessel als Druckfilter eingesetzt werden, besitzen einen Steuerkopf, der eine rotierende Welle mit den feststehenden Rohren zur Filtratableitung nach außen verbindet. Die Filterwelle trägt ein oder mehrere (teilweise bis zu 14 oder mehr) Filterscheiben. Jede Scheibe hat meist 10 bis 48 Filterzellen. Ausnahmen bestätigen die Regel. Zum Beispiel gibt es solche Filter mit ein und zwei Steuerköpfen.

Die DE 2804779 A1 lehrt ein individuelles Verrohren jeder einzelnen Filterzelle zusammen mit strömungsgünstiger Rohrführung. Hier liegen dann pro Zellenreihe die Filtratalleitungsrohre konzentrisch übereinander. Meistens gibt es jedoch je Filterzellenreihe nur ein Filtratsammelrohr.

Es sind auch Trommelfilter bekannt, die bei sehr feinkörnigen Produkten keinen Gasdurchsatz haben und ebenfalls belüftet werden müssen. Hier gibt es innerhalb der Trommel zwei Filtratsammelrohre je Filterzelle oder in einem Fall auch nur ein außenliegendes Filtratabfuhrrohr in den Hauptsteuerkopf, während gegenüberliegend ein kleiner Steuerkopf vor der Kuchenabnahme Luft am anderen Ende der Zelle einlässt. Der Trommelfilter unterscheidet sich aber von einem Scheibenfilter dadurch, dass die Filterzellen der Länge nach weitgehend waagerecht verlaufen, so dass ein Zellenzugang von beiden Seiten möglich ist und dass das Filtertuch nicht als Beutel aufgebracht ist.

Bei gattungsgemäßen Scheibenfiltern ist die übliche Methode, die Filtertücher als Beutel über die Filterzelle zu stülpen. Es gibt somit bei Scheibenfilterzellen immer nur einen Auslass, der sich am Innenradius der Zelle befindet, während der Rest etwa mit Filtertuch und Klemmprofilen bedeckt ist. Naturgemäß ist dann auch nur dieser einzige Anschluss der Filterzelle mit einem Filtratsammelrohr oder der Filtratableitung verbunden, über das sowohl das Filtrat als auch die Luft abgeführt werden und über das auch die Druckluft oder das Ausstoßgas für den Kuchenabwurf eingetragen wird.

Die Scheibenfilterzelle unterscheidet sich somit von der Trommelfilterzelle deutlich, da beim Trommelfilter die Rückseite der Filterzelle, die zum Trommelinnern gewandt ist, mit mehr als einem Filtratrohr versehen werden kann. Somit kann man über separate Rohre beim Trommelfilter Luft eintragen, die zur Filtratabfuhr dienlich ist. Bei bekannten Scheibenfilter hingegen ist so etwas nicht möglich, weil hier eine Zelle auch nur einen Anschluss nach außen hat.

Filterkuchen, die bei der zur Verfügung stehenden Druckdifferenz keine oder nur eine sehr geringe Permeabilität für Entfeuchtungsgas aufweisen, erschweren den Filtratabfluss aus den Filterzellen, also die Entleerung derselben, erheblich. Die Erfahrung zeigt, dass sich noch Filtrat im Filtratsammelrohr und/oder in der Filterzelle befinden kann, wenn bereits die Druckluft zum Kuchenabwurf in das Filtratsammelrohr eingeleitet wird. Im Filtratsammelrohr/ -system befindliche Flüssigkeit wird durch die Druckluft oder das Ausstoßgas zurück Richtung letzte Filterzelle getrieben. Dadurch wird zum einen der Druckluftstrom behindert und der Impuls für den Kuchenabwurf reduziert. Zum anderen kann sogar Filtrat zurück zum Filterkuchen gedrückt werden. Die Folge ist eine Verschlechterung bis hin zum Versagen des Kuchenabwurfs und/oder eine Erhöhung der Kuchenrestfeuchte, welche ebenso ein wichtiges Prozessziel ist. Folglich muss also die Filterdrehzahl reduziert werden, um dem Filtrat genug Zeit zum Verlassen des Filtratsystems zu geben, was Einbußen beim Durchsatz und damit bei der Wirtschaftlichkeit des Filters nach sich zieht.

Bei Trommelfiltern kann dieses Problem über einen zweiten, sogenannten Belüftungssteuerkopf gelöst werden. Das Trommelfilter hat dabei den zusätzlichen Vorteil, dass der Belüftungssteuerkopf direkt ans Zellenende angeschlossen werden kann, wodurch die Belüftung der Zellen sehr effektiv realisiert werden kann.

Grundsätzlich ist ein Belüftungssteuerkopf auch bei einem Scheibenfilter möglich, doch erhöhen sich dadurch die Herstellkosten und die Wartungsanfälligkeit eines Filters deutlich. Und darüber hinaus ist der Anschluss an die Zellenenden nicht oder nur durch einen erheblichen Zusatzaufwand möglich, der die Herstellungskosten noch weiter in die Höhe treibt.

Weiterhin besteht bei einem Trommelfilter die Möglichkeit, die vor- und nachlaufenden Filtratrohre im Trommelinneren auch über einen einzigen Steuerkopf unterschiedlich zu nutzen. Bei einem Scheibenfilter ist das nicht möglich, da es nur ein Filtratrohr gibt, welches mehrere Filterzellen, etwa eine oder zwei pro Scheibe, miteinander verbindet.

Weitere gattungsbildende Vorrichtungen gemäß dem jeweiligen Oberbegriff der Ansprüche 1 und 10 werden in der WO 2020/185484 A1 und der DE 36 16 201 A1 gezeigt.

Der Erfindung liegt die **Aufgabe** zugrunde, ein Verfahren und eine Vorrichtung anzugeben, bei welchen mittels eines Scheibenfilters bei einem weiter einfachen Aufbau eine besonders effiziente Entleerung des Filtrats ermöglicht werden.

Die Aufgabe wird zum einen durch ein Verfahren mit den Merkmalen des Anspruchs 1 und zum anderen durch eine Vorrichtung mit den Merkmalen des Anspruchs 10 gelöst. Bevorzugte Ausführungsformen der Erfindung sind in den abhängigen Ansprüchen angegeben.

Das erfindungsgemäße Verfahren ist dadurch gekennzeichnet, dass nach dem Anfiltrieren des Filterkuchens und vor und/oder während des Entfeuchtens des Filterkuchens in den Filtratraum des jeweiligen Filtersegmentes mittels einer steuerbaren Gaszuführeinrichtung definiert ein Austreibgas eingeleitet wird, durch welches ein Austreiben des Filtrates aus dem Filtratraum des Filtersegmentes in die mindestens eine Filtratableitung unterstützt wird.

Ein Aspekt der Erfindung betrifft eine steuerbare Gaszuführeinrichtung, insbesondere eine Ergänzung am Steuerkopf von Scheibenfiltern. Diese Gaszuführeinrichtung führt dazu, dass das Filtrat, das bei der Filtration durch den Filterkuchen und durch das Filtermedium in den Filtratraum hinter dem Filtermedium des Filtersegments, auch Paneel, Kammer oder vergleichbar genannt, fließt, durch das Austreibgas beschleunigt wird und dadurch in kürzerer Zeit als ohne die Gaszuführeinrichtung in die Filtratableitung oder das Filtratrohrsystem und anschließend insbesondere in den Steuerkopf des Scheibenfilters gelangt. Dadurch ist es möglich, das Scheibenfilter mit höherer Drehzahl zu betreiben. Dies wiederum führt dazu, dass die Leistung oder der

Durchsatz des Scheibenfilters oder der Filtervorrichtung insgesamt steigt. Weiterhin ist durch die neuartige Zellenentleerung eine verbesserte Kuchenrestentfeuchtung möglich.

Es ist erreichbar, über eine geeignete Einstellung der Druckverhältnisse in dem Filtratraum die Zellenentleerung zu beschleunigen. Eine mögliche Voraussetzung dafür ist, dass die Filterzelle am Ende der Kuchenbildung nicht vollständig mit Filtrat gefüllt ist, was insbesondere bei schlecht filtrierenden Produkten, wie mineralische Tailings aller Art, der Fall ist.

Eine bevorzugte Verfahrensvariante der Erfindung besteht darin, dass nach dem Durchlaufen der Entfeuchtungszone in den jeweiligen Filtratraum ein Ausstoßgas unter Druck eingeleitet wird, wobei der anfiltrierte Filterkuchen von dem Filtermedium gelöst und abgeblasen wird. Das Ausstoßgas wird gegenüber dem zuvor eingeleiteten Austreibgas mit einem erhöhten Druck in den Filtratraum eingeleitet, durch welchen ein Abblasen und Lösen des Filterkuchens von der Außenseite des Filtermediums bewirkt wird. Durch die zuvor erfolgte vollständige oder zumindest weitgehende Entleerung des Filtratraumes von dem Filtrat wird die Gefahr einer Rekontamination des Filterkuchens mit Filtrat und damit einer Erhöhung der Restfeuchte des Filterkuchens zuverlässig entgegengewirkt.

Grundsätzlich können zum Austreiben des Filtrates aus dem Filtratraum und zum Ausstoßen oder Abblasen des Filterkuchens beliebige und auch zueinander unterschiedliche Gase, etwa ein Inertgas für empfindliche Produkte, eingesetzt werden. Besonders zweckmäßig ist es nach einer Verfahrensvariante, dass das Austreibgas und das Ausstoßgas gleich sind und insbesondere Luft verwendet wird. Dies ist besonders kostengünstig und umweltschonend.

Eine weitere vorteilhafte Verfahrensvariante der Erfindung besteht darin, dass das Austreibgas kontinuierlich über die Zeitdauer des Austreibens des Filtrats in den jeweiligen Filtratraum eingeleitet wird. Dies kann vorzugsweise über eine separate Zuleitung in den Filtratraum oder über eine entsprechend große Dimensionierung der Filtratableitung mit einer entsprechenden Gestaltung des Steuerkopfes erfolgen.

Gemäß einer alternativen Verfahrensgestaltung hierzu ist es vorteilhaft, dass das Austreibgas zu Beginn des Austreibens in den jeweiligen Filtratraum für eine Zeitspanne eingeleitet wird, welche kürzer als die Zeitdauer des Austreibens ist. Dies kann insbesondere dadurch erzielt werden, dass für eine vorgegebene Zeitspanne ein Austreibgas unter Druck in den Filtratraum eingeleitet wird, so dass sich bei Abschluss des Einleitens eine Druckgasblase in dem Filtratraum ausbildet. Diese Druckgasblase mit einem erhöhten Druck stellt sicher, dass hierdurch ein ausreichender Druck auf das im Filtratraum verbliebene Filtrat ausgeübt wird, so dass das Restfiltrat beschleunigt aus dem Filtratraum in Filtratableitung gedrückt wird.

Nach einer Ausgestaltung des erfindungsgemäßen Verfahrens kann dies insbesondere dadurch erzielt werden, dass die Zeitspanne dadurch begrenzt wird, das Filtrat in dem jeweiligen Filtratraum eine Zufuhröffnung für das Austreibgas ausfüllt. Dies kann insbesondere dann erfolgen, wenn zur Zuführung des Austreibgases die Filtratableitung zu dem jeweiligen Filtratraum verwendet wird. Durch das Ausfüllen oder Blockieren der Zuführöffnung wird die Zufuhr von Austreibgas erheblich behindert.

Nach einer weiteren Ausgestaltung des erfindungsgemäßen Verfahrens ist es besonders vorteilhaft, dass bei einem Rotieren des Scheibenfilters im Uhrzeigersinn ein Austreiben von Filtrat aus dem Filtersegment zwischen einer 8-Uhr-Position und einer 12-Uhr-Position des jeweiligen Filtersegmentes erfolgt. Bei einer entsprechenden Dimensionierung der Filtratableitung und Einstellung der Filtratmenge im Filtratraum kann Austreibgas von einem Druckgasreservoir über die Filtratableitung bei diesem Bewegungssektor in den Filtratraum eingeleitet werden.

Zur Beschreibung wird ein Scheibenfilter, das im Uhrzeigersinn dreht, gewählt. In den Steuerkopfkammern für Kuchenbildung und Entfeuchtung des Scheibenfilters wird ein Druck (oder Vakuum) eingestellt, der dazu führt, dass am Filtermedium eine Druckdifferenz entsteht, die in der Kuchenbildung dazu führt, dass sich an der Oberfläche des Filtermediums eine Feststoffschicht (üblicherweise Filterkuchen genannt) bildet und die Flüssigkeit (in der Regel Filtrat genannt) durch das Filtermedium in den Raum dahinter fließt. Am Ende der Kuchenbildung (ca. 8-Uhr-Position) ist die Filterzelle also teilweise mit Austreibgas und der restliche Teil mit Filtrat bei einem Druck p1 gefüllt. Das Filtrat befindet sich im Wesentlichen auf der von Filtratableitung abgewandten Seite.

Jetzt kommt die erfindungsmäßige Ausbildung der Gaszuführeinrichtung mit einer besonderen Gestaltung insbesondere am Steuerkopf eines Scheibenfilters ins Spiel. Diese ergänzende Ausgestaltung befindet sich vorzugsweise zwischen der 8-Uhr- und der 10-Uhr-Position des Scheibenfilters. In einem zusätzlichen Anschluss bzw. in einer zusätzlichen Kammer kann jetzt ein höherer Druck p3 als in der Kuchenbildung (p1) eingestellt werden. Dies setzt voraus, dass das Filtersegment noch nicht vollständig mit Filtrat gefüllt ist (Füllgrad kleiner 100 %). Der nicht mit Filtrat gefüllte Raum wird durch ein zufließendes gasförmiges Medium, das Austreibgas, auf einen höheren Druck p3 gebracht, als er in der nachfolgenden Entfeuchtungszone (p2) herrscht. Durch das Weiterdrehen des Filters über die 9-Uhr-Position hinaus, fließt das Filtrat aufgrund von Hydrostatik in Richtung des Filtratrohrsystems. Das Filtrat sammelt sich dabei am Auslass des Filtersegments und das gasförmige Medium fließt und sammelt sich auf der gegenüberliegenden Seite. Das Ende des Filtratrohrsystems, das an dieses Segment angeschlossen ist, wird jetzt im Steuerkopf mit der Kammer der Entfeuchtungszone verbunden. Darin ist, wie oben erwähnt, ein geringerer Druck p2 eingestellt, als er zu diesem Zeitpunkt im Filtersegment herrscht (p3). Der Gasinhalt bei erhöhtem Druck p3 in dem Filtersegment entspannt sich von p3 auf p2 und drückt dabei das Filtrat aus dem Filtratraum in die Filtratableitung Richtung Steuerkopf. Das Filtrat strömt beschleunigt durch den Auslass und kommt dadurch schneller am Steuerkopf an. Dies ist wichtig, denn erst bei einem nahezu leeren Filtratrohrsystem ist es möglich, am Ende der Entfeuchtungszone, durch einen Druckluftrückstoß, der durch das Filtratrohrsystem in die Filtersegmente unterhalb des Filtermediums geleitet wird, die Feststoffschicht vom Filtermedium zu entfernen (abzublasen bzw. abzuwerfen) und einen neuen Filtrationszyklus starten zu können. Je schneller daher das Filtrat aus den Filtersegmenten und dem Filtratrohrsystem entfernt wird, desto schneller kann das Scheibenfilter drehen und desto mehr Leistung bzw. Durchsatz erzielt es. Dieser Effekt kommt umso stärker zum Tragen, je weniger Luft bzw. Gas durch die Feststoffschicht (den Filterkuchen) auf dem Filtermedium fließt und je geringer das Kammervolumen unterhalb des Filtermediums am Ende der Kuchenbildung mit Filtrat gefüllt ist.

Um den Druck p3 im zusätzlichen Anschluss am Steuerkopf zu realisieren, gibt es mehrere Möglichkeiten. Die einfachste davon ist ein Stutzen am Steuerkopf, an dem eine geeignete Armatur (z.B. Vakuum-Belüftungsventil, Sicherheitsventil, oder ähnliches) befestigt ist. An der Armatur lässt sich der gewünschte Druck p3 mit genügender Genauigkeit einstellen. Sollte dabei die notwendige Luftmenge nicht in der zur Verfügung stehenden Zeit zugeführt werden können, so wird der zusätzliche Anschluss mit einem ausreichend großen Behälter verbunden, der seinerseits über eine geeignete Armatur (z.B. Druckminderer, Sicherheitsventil, Vakuum-Belüftungsventil, oder ähnliches) auf dem Druck p3 gehalten wird. Sollte auch dabei die notwendige Luftmenge nicht in der zur Verfügung stehenden Zeit zugeführt werden können, so wird der zusätzliche Anschluss mit einem ausreichend großen Behälter verbunden, der unter einem Druck p4 steht, der größer als der Druck p3 ist. Die Verbindung zwischen dem zusätzlichen Anschluss am Steuerkopf und diesem Behälter kann mit einer Armatur versehen werden, um die Luftmenge sowohl zeitlich als auch volumetrisch wie notwendig einzustellen.

Zahlenbeispiel Vakuumscheibenfilter:
- Der Umgebungsdruck beträgt p,a = 1,013 bar,abs (p,a muss immer größer als p1, p2 und p3 sein)
- Kuchenbildung mit p1 = 0,2 bar,abs
- Erfindungsgemäße zusätzliche Zone mit p3 = 0,7 bar,abs
- Kuchenentfeuchtung mit p2 = 0,2 bar,abs

Eine weitere vorteilhafte Ausführungsvariante des erfindungsgemäßen Verfahrens besteht darin, dass das Austreibgas über eine getrennte Zuführleitung und über mindestens eine Filtratableitung in das Filtersegment eingeleitet wird. Die jeweilige Leitung kann dabei Teil der Gaszuführeinrichtung sein, welche insbesondere ein Druckgasreservoir oder einen Druckgasbehälter umfasst. Die Leitungsverbindung erfolgt insbesondere über einen sogenannten Steuerkopf, welcher die Leitungen in der rotierenden Filterwelle mit den feststehenden Leitungen am Stator des Steuerkopfes verbindet. Hierdurch kann eine zuverlässige Zu- und Ableitung erzielt werden.

Hinsichtlich der Druckeinstellung ist es bevorzugt, dass ein Austreibdruck (p3) in dem Filtersegment zum Austreiben des Filtrats größer als ein Filtrationsdruck (p1) und der Entfeuchtungsdruck (p2) in dem Filtersegment ist. Hierdurch kann ein beschleunigtes Austreiben des Filtrats gegenüber einem herkömmlichen Filterprozess erzielt werden.

Insbesondere kann es dabei zweckmäßig sein, dass der Austreibdruck (p3) in dem Filtersegment kleiner als ein Ausstoßdruck des Ausstoßgases zum Ablösen der Filterkuchens ist. Insbesondere ist der Austreibdruck so eingestellt, dass hierdurch kein vorzeitiger Kuchenabwurf vom Filtermedium erfolgt. Das Ablösen des Filterkuchens wird erst nach der Entfeuchtungszone in einer Kuchenabnahmezone durch Einleitung des Ausstoßgases mit einem entsprechend höheren Lösedruck bewirkt.

Die erfindungsgemäße Vorrichtung ist dadurch gekennzeichnet, dass eine Gaszuführeinrichtung vorgesehen ist, mit welcher nach dem Anfiltrieren des Filterkuchens vor und/oder während des Entfeuchtens des Filterkuchens in dem Filtratraum des jeweiligen Filtersegmentes definiert ein Austreibgas einleitbar ist, durch welches ein Austreiben des Filtrats aus dem Filtratraum des Filtersegmentes in die Filtratableitung unterstützt ist.

Die erfindungsgemäße Vorrichtung kann insbesondere zur Durchführung des zuvor beschriebenen Verfahrens eingesetzt werden und ist hierzu ausgebildet. Es können dabei die zuvor beschriebenen Vorteile erzielt werden.

Eine bevorzugte Ausgestaltung der erfindungsgemäßen Vorrichtung besteht darin, dass an zumindest einem Endbereich der Filterwelle ein Steuerkopf zur Abführung von Filtrat und/oder einer Zu- und/oder Abführung von Gas angeordnet ist. Vorzugsweise sind an beiden Endbereichen der rotierend gelagerten und antreibbaren Filterwelle Steuerköpfe angeordnet. Dabei kann ein erster Steuerkopf zur Zuleitung des Austreibgases beziehungsweise des Ausstoßgases ausgebildet sein. Ein zweiter Steuerkopf kann insbesondere zum Ableiten des Filtrats vorgesehen sein. Über diesen zweiten Steuerkopf kann dann auch, soweit notwendig, das entspannte Austreibgas entlüftet oder mitausgeleitet werden. Der Steuerkopf weist einen feststehenden Stator und einen mit der Filterwelle mitdrehenden Rotor auf, wobei zwischen dem Stator und dem Rotor fluiddichte Leitungsverbindungen gebildet sind.

Aus Messungen ist bekannt, dass das Sammelrohr, also die Filtratableitung, das Entleeren der Filtersegmente sogar behindern kann. Wenn aber ein Austreibgas über einen Zulauf eingebracht wird, verkürzt sich die Entleerzeit deutlich. Eine kürzere Entleerzeit bedeutet eine kürzere Prozesszeit, was für den Durchsatz des Filters positiv ist. Des Weiteren wird auch kein oder deutlich weniger Filtrat bei einem Druckluftrückstoß in den Filterkuchen zurückgeblasen (bessere Restfeuchte des Kuchens).

Im Folgenden werden nun verschiedene Lösungswege beschrieben, die nur beispielhaft sind. Eine Grundidee beruht darauf, beim Entleervorgang der Filterzellen Luft von unten in die Filterzellen aufsteigen zu lassen und hierbei diese Luft entweder in das Sammelrohr von der Steuerkopfseite oder der entgegengesetzten Seite des Steuerkopfes einzubringen. Ebenfalls gehören zu dieser Idee auch Lösungen, bei denen jede oder einige der Filterelemente einen eigenen Gaszugang haben.

Die Erfindung wird nachfolgend anhand von bevorzugten Ausführungsbeispielen weiter beschrieben, welche schematisch in den Zeichnungen dargestellt sind. In den Zeichnungen zeigen:
- Fig.1: eine schematische Seitenansicht einer erfindungsgemäßen Vorrichtung;
- Fig. 2: eine Vorderansicht der Vorrichtung von Figur 1;
- Fig. 3: eine schematische teilgeschnittene Ansicht der Vorrichtung der Figuren 1 und 2 zur Verdeutlichung der Filtratableitung;
- Fig. 4: ein Detail aus Figur 3;
- Fig. 5: eine schematische Darstellung zu einem Teil von Filtersegmenten beim erfindungsgemäßen Austreiben von Filtrat;
- Fig. 6: eine schematische Darstellung zu einem Steuerkopf für eine Vorrichtung nach der Erfindung;
- Fig. 7: eine Teilseitenansicht einer weiteren erfindungsgemäßen Vorrichtung;
- Fig. 8: eine Teilvorderansicht zu der Vorrichtung von Figur 7;
- Fig. 9: eine schematische Darstellung zu einem möglichen Filtersegment für die Erfindung;
- Fig. 10: eine weitere schematische Darstellung zu einem Filtersegment für die Erfindung;
- Fig. 11: eine schematische Detaildarstellung zu einer Filterwelle mit Steuerkopf für eine erfindungsgemäße Vorrichtung;
- Fig. 12: eine schematische Querschnittsansicht für einen Steuerkopf;
- Fig. 13: eine schematische Darstellung einer weiteren Filterwelle mit Steuerkopf für eine Vorrichtung nach der Erfindung;
- Fig. 14: eine schematische Teilvorderansicht zu einer weiteren erfindungsgemäßen Vorrichtung mit Gaszuführeinrichtung an den Filtersegmenten.

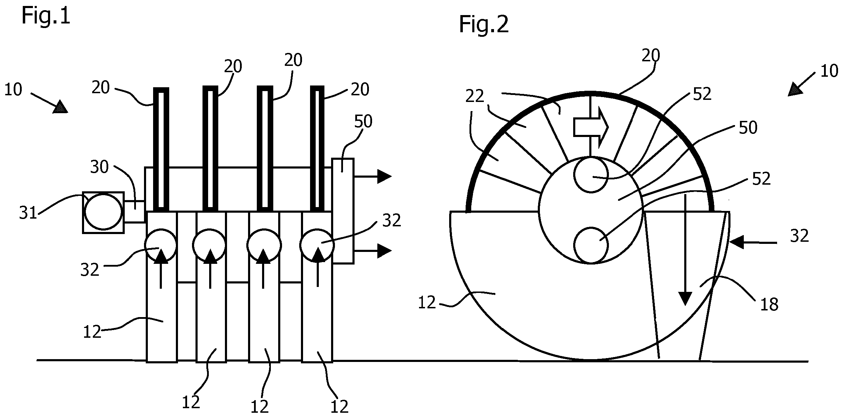

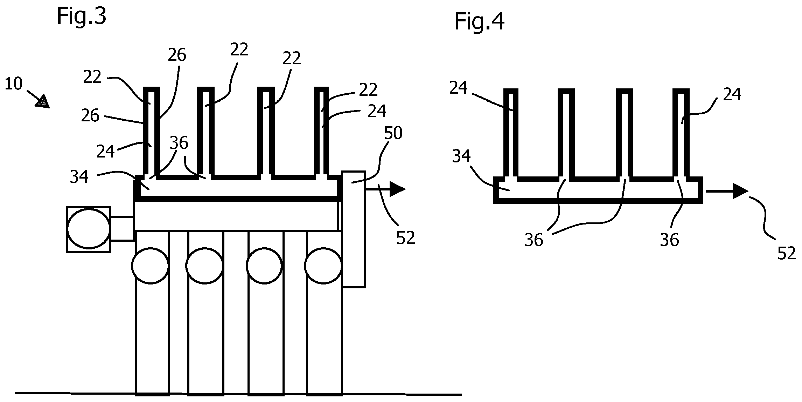

Der grundsätzliche Aufbau einer erfindungsgemäßen Vorrichtung 10 zum Filtern einer Suspension wird im Zusammenhang mit den Figuren 1 bis 4 erläutert. In dem dargestellten Ausführungsbeispiel einer bevorzugten Vorrichtung 10 sind insgesamt vier Scheibenfilter 20 auf einer gemeinsamen Filterwelle 30 angeordnet, welche von einem Antrieb 31 drehend angetrieben wird. Die Scheibenfilter 20 tauchen dabei jeweils in einem halbreisförmigen Trog 12 ein, welcher über eine Zuleitung 32 mit einer zu filtrierenden Suspension befüllt wird.

Jedes Scheibenfilter 20 ist in eine Vielzahl von kammerartigen Filtersegmenten 22 unterteilt, welche zumindest an ihren Seitenflächen mit einem Filtermedium 26, etwa einem Filtertuch oder einer Filtermembran, versehen sind. Aufgrund einer anliegenden Druckdifferenz wird in dem Trog 12 Suspension angesaugt, wobei Flüssigkeit aus der Suspension als sogenanntes Filtrat das Filtermedium 26 durchdringt und in einen inneren Filtratraum 24 des jeweiligen Filtersegmentes 22 gelangt. Gleichzeitig setzen sich Feststoffpartikel aus der Suspension an der Außenseite des Filtermediums 26 als ein sogenannter Filterkuchen ab.

Bei dem dargestellten Ausführungsbeispiel wird gemäß der Ansicht von Figur 2 die Filterwelle 30 im Uhrzeigersinn angetrieben, wobei das jeweilige Scheibenfilter 20 an einer 9-Uhr-Position aus dem Filtertrog 12 austritt. Zur weiteren Entfeuchtung des anfiltrierten Filterkuchens besteht gegenüber der Umgebungsatmosphäre, welche auch ein Druckraum sein kann, weiterhin eine Druckdifferenz zum inneren Filtratraum 24 des jeweiligen Filtersegmentes 22, so dass grundsätzlich Restflüssigkeit in dem anfiltrierten Filterkuchen in den Filtratraum 24 eingesogen wird und Filtrat in den jeweiligen Filtratraum 24 aus dem Filtersegment 22 in eine Filtratableitung 34 an der Filterwelle 30 geleitet wird. Die Filtratableitung 34 kann als ein Sammelrohr ausgebildet sein, an welcher eine Vielzahl von Filtersegmenten 22 der parallelen Scheibenfilter 20 und insbesondere alle Filtersegmente 22 in der gleichen Winkelposition über eine jeweilige Durchlassöffnung 36 leitungsverbunden angeschlossen sind. In der Filterwelle 30 können mehrere Filtratableitungen 34 für Filtersegmente 22 in den verschiedenen Winkelpositionen vorgesehen sein.

Das Filtrat kann so aus den einzelnen Filtersegmenten 22 über die jeweilige Filtratableitung 34 zu einem grundsätzlich bekannten Steuerkopf 50 abgeführt werden. Der Steuerkopf 50 weist grundsätzlich einen mit der Filterwelle 30 mitdrehenden Rotor und einen feststehenden Stator auf. Im dargestellten Ausführungsbeispiel weist der Steuerkopf 50 zwei Auslässe 52 für das Filtrat am Stator des Steuerkopfes 50 auf.

Zwischen einer 1-Uhr-Position und einer 3-Uhr-Position kann eine Entnahmeeinrichtung zum Entnehmen des Filterkuchens von den Scheibenfiltern 20 mit einer Entnahme 18 vorgesehen sein. Nach der Kuchenentnahme kann das jeweilige Filtersegment 22 wieder in die Suspension in dem Trog 12 für einen weiteren Filtrationsschritt eintauchen.

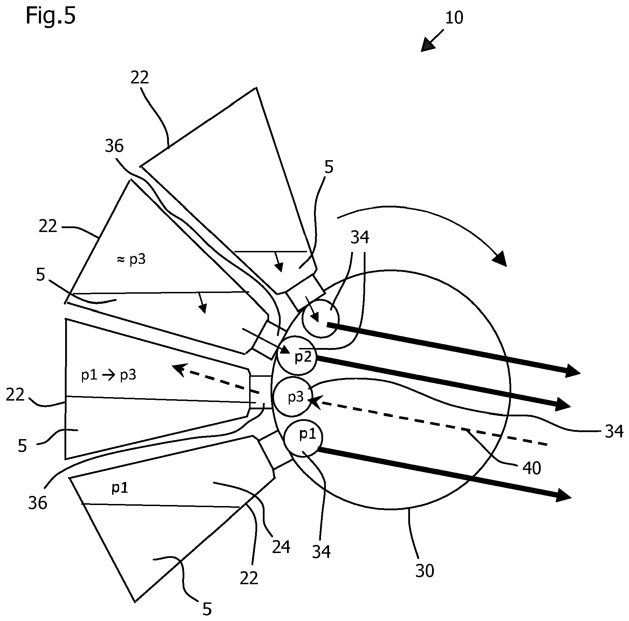

Die Funktionsweise einer erfindungsgemäß vorgesehenen Gaszuführeinrichtung 40 an einer Vorrichtung 10 zum Filtern wird schematisch im Zusammenhang mit Figur 5 erläutert. In der 8-Uhr-Position taucht ein Filtersegment 22, welches teilweise mit Filtrat 5 gefüllt ist aus der Suspension auf, wobei über die zugehörige Filtratableitung 34 ein Filtrationsdruck p1 für die Kuchenbildung im Filtratraum 24 eingestellt ist.

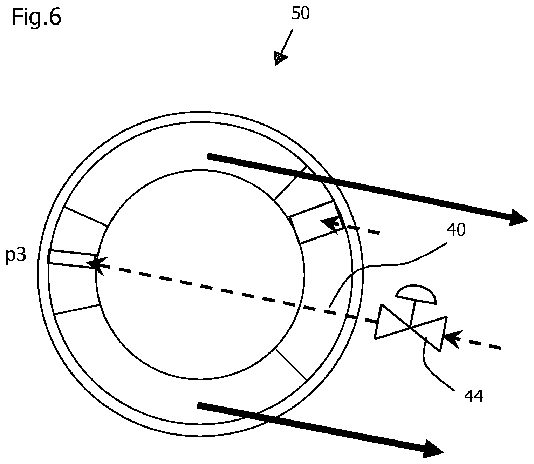

In einer 9-Uhr-Position kann über eine Ergänzung am Steuerkopf 50, welche schematisch in Figur 6 verdeutlicht ist, über die Gaszuführeinrichtung 40 ein Austreibgas mit einem erhöhten Druck p3, welcher größer als der Druck p1 ist, in den Filtratraum 24 eingeleitet werden. Dies kann über die Durchlassöffnung 36 erfolgen, welche in der 9-Uhr-Position durch das Filtrat 5 im Filtratraum 24 des entsprechenden Filtersegmentes 22 noch nicht ausgefüllt ist, wodurch die Zufuhr erheblich behindert würde. Hierdurch wird in dem Filtratraum 24 der erhöhte Druck p3 eingestellt. Bei einem Weiterdrehen der Filterwelle 30 gelangt das entsprechende Filtersegment 22 gemäß Figur 5 in eine 10-Uhr-Position, in welcher das Filtrat 5 im Filtratraum 24 nunmehr die Durchlassöffnung 36 ausfüllt. Durch den erhöhten Austreibdruck p3 in den Filtratraum 24 kann das verbliebene Filtrat 5 verstärkt zur Filtratableitung 34 ausgetrieben werden, wobei in der Filtratableitung 34 ein geringerer Druck p2 zum Bewirken einer entsprechenden Druckdifferenz eingestellt ist. So kann aus den Filtersegmenten 22 auch bei einem Zusetzen des jeweiligen Filtermediums 26 durch einen besonders feinkörnigen Filterkuchen eine zuverlässige und schnelle Entleerung der Filtraträume 24 bewirkt werden. Der Filtratabfluss ist in Figur 5 durch zwei schwarze Pfeile dargestellt.

In Figur 6 ist schematisch ein Stator des Steuerkopfs 50 dargestellt, wobei einzelne Zonen für Zuführungen und Abführungen vorgesehen sind. Etwa in der 9-Uhr-Position ist dabei eine Zuführöffnung für das Austreibgas von der Gaszuführeinrichtung 40 zum Eintritt in das in dieser Winkelposition befindliche Filtersegment 22 vorgesehen. In einer 2-Uhr-Position kann eine Zuführung für ein Ausstoßgas zum Ablasen des Filterkuchens vorgesehen sein. Dazwischen liegende Bereiche können Öffnungen zur Filtratabfuhr aufweisen, welcher durch schwarze Pfeile angedeutet ist.

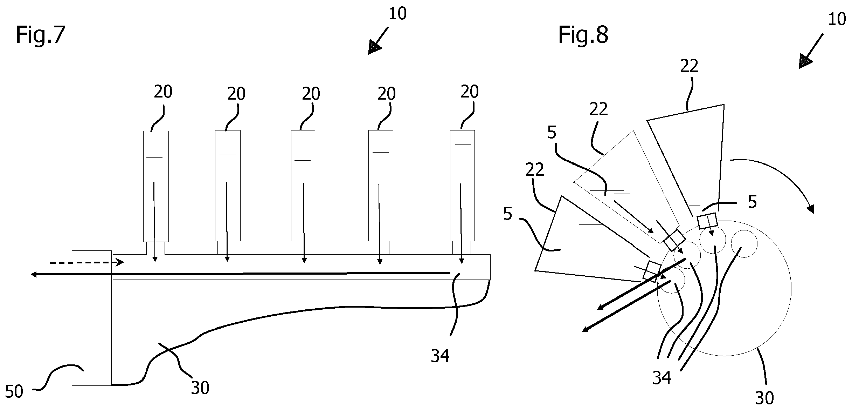

In den Figuren 7 und 8 ist eine Ausführungsform einer erfindungsgemäßen Vorrichtung 10 dargestellt, bei welcher insgesamt fünf Scheibenfilter 20 an einer Filterwelle 30 mit einer Filtratableitung 34 angeordnet sind. Zur Vereinfachung sind von den Scheibenfiltern 20 jeweils nur einzelne Filtersegmente 22 dargestellt, bei welchen eine Entleerung nach dem zuvor dargelegten Prinzip gemäß den Figuren 5 und 6 erfolgt. Bei der Ausführung nach den Figuren 7 und 8 erfolgt die Ableitung des Filtrates 5 und die Zuführung des Austreibgases über das gleiche Sammelrohr der jeweiligen Filtratableitung 34. Dabei ist lediglich an einer Seite der Filterwelle 30 ein einzelner Steuerkopf 50 vorgesehen, über welchen das Austreibgas zugeführt und das Filtrat 5 abgeführt werden.

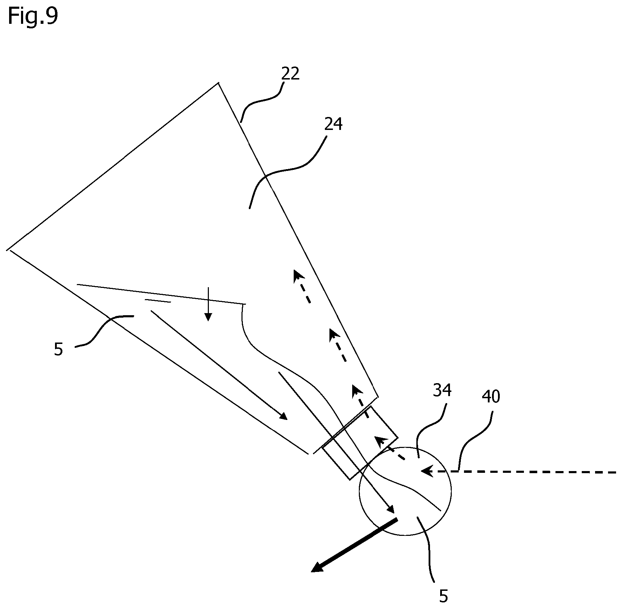

In der Figur 9 ist eine weitere mögliche Ausführungsvariante der Erfindung dargestellt, wobei in den Filtratraum 24 eines Filtersegmentes 22 in der Entleerungszone kontinuierlich Austreibgas über die Filtratableitung 34 zugeleitet wird. Gleichzeitig wird mit der Zuleitung des Austreibgases ein kontinuierliches Abführen und Austreiben des Filtrates 5 aus dem Filtratraum 24 in die Filtratableitung 34 bewirkt, wie anschaulich in Figur 9 dargestellt ist.

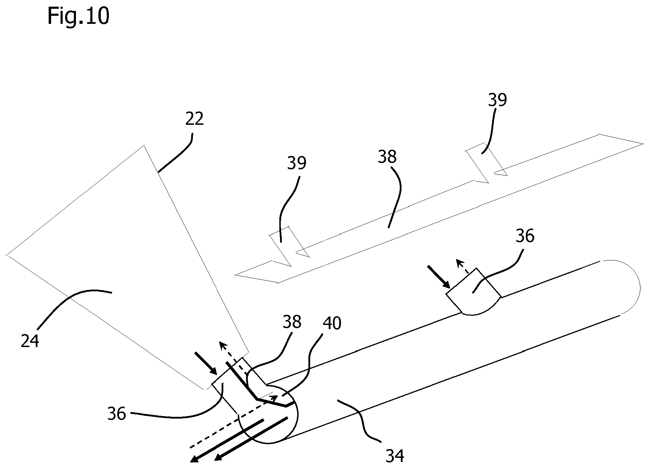

Gemäß einer weiteren Abwandlung der Erfindung nach Figur 10 kann in der Filtratableitung 34 eine Trennwand 38 beispielsweise aus einem Blech eingezogen sein, welche Abschnitte 39 aufweist, welche in den Bereich der Durchlassöffnung 36 am Fuß der Filtersegmente 22 hineinreicht. Die Trennwand 38 ist zur besseren Darstellung in Figur 10 auch getrennt zu der Filtratleitung 34 gezeigt.

Durch die Trennwand 38 können innerhalb der Filtratableitung 34 zwei getrennte Bereiche geschaffen werden, wobei ein Bereich zum Leiten des Filtrats 5 und ein davon getrennter Bereich als Teil der Gaszuführeinrichtung 40 zum Zuführen des Austreibgases in den Filtratraum 24 des Filtersegmentes 22 ausgebildet sind. Hierdurch kann in dem Sammelrohr ein Beruhigungszone gebildet werden, in welcher das Austreibgas entgegengesetzt zum Filtratstrom in die Filtraträume 24 geleitet werden kann.

Grundsätzlich können die Abschnitte 39 der Trennwand 38 auch länger ausgebildet sein und bis in die Filtraträume 24 der Filtersegmente 22 hineinreichen. Hierdurch kann eine Art Kamineffekt erzeugt werden, wobei die leichtere Phase, nämlich das Austreibgas, besonders gut nach oben steigen kann.

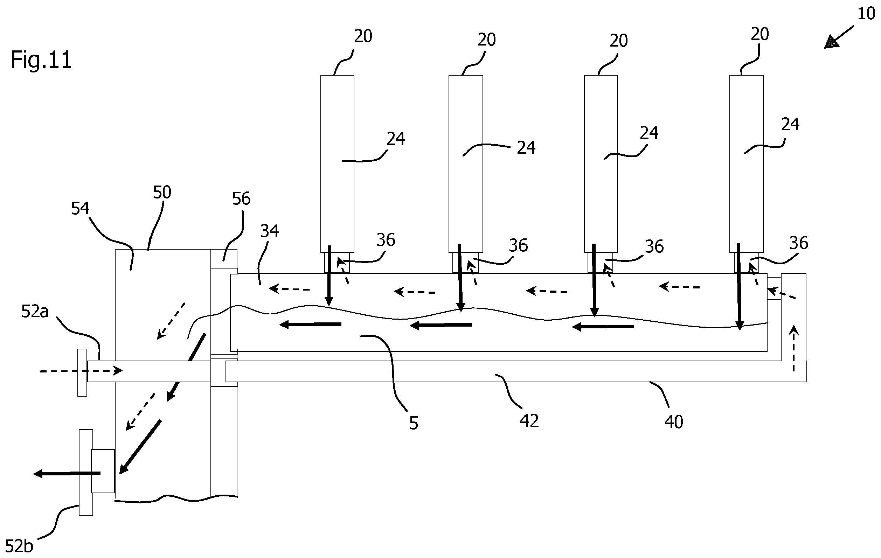

Eine weitere mögliche Ausführungsform einer erfindungsgemäßen Vorrichtung 10 zum Filtrieren ist in Figur 11 schematisch dargestellt, wobei über einen Steuerkopf 50 mit einem Stator 54 und einem Rotor 56 sowohl das Austreibgas über einen ersten Anschluss 52a zugeführt und das Filtrat 5 über einen zweiten Anschluss 52b zusammen mit ausströmendem Gas abgeführt werden kann.

Über den ersten Anschluss 52a wird Austreibgas zu einer Zuleitung 42 als Teil der Gaszuführeinrichtung 40 zum gegenüberliegenden Ende des Sammelrohrs der Filtratableitung 34 geführt und in die Filtratleitung 34 eingeleitet. Das Austreibgas kann dabei über die Durchlässe 36 in die jeweiligen Filtraträume 24 aufsteigen und dabei verbliebenes Filtrat 5 in den Filtraträumen 24 der Scheibenfilter 20 nach unten in die Filtratleitung 34 austreiben. Von dort wird das Filtrat 5 mit dem entspannten Austreibgas zu dem zweiten Auslass 52b am Stator 54 des Steuerkopfes 50 geleitet.

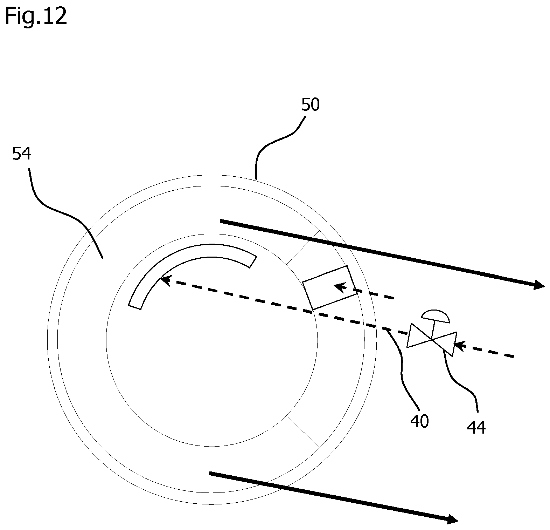

In Figur 12 ist ein Teil des hierzu vorgesehenen Steuerkopfes 50 mit dem Stator 54 näher dargestellt. In einem innenliegenden Bereich ist zur Zuführung des Austreibgases am Stator 54 bei der Übergabe auf den Rotor 56 ein Schlitz vorgesehen, welcher mit der Gaszuführeinrichtung 40 mit einem Stellventil 44 zur Zuführung des Austreibgases in Verbindung steht. Über weitere Öffnungen am Stator 54 des Steuerkopfes 50 kann eine Filtratabfuhr erfolgen, die durch schwarze Pfeile angedeutet ist. Über eine weitere Öffnung etwa an der 2-Uhr-Position kann ein Ausstoßgas zum Abwerfen des Filterkuchens in den Filtratraum 24 geleitet werden.

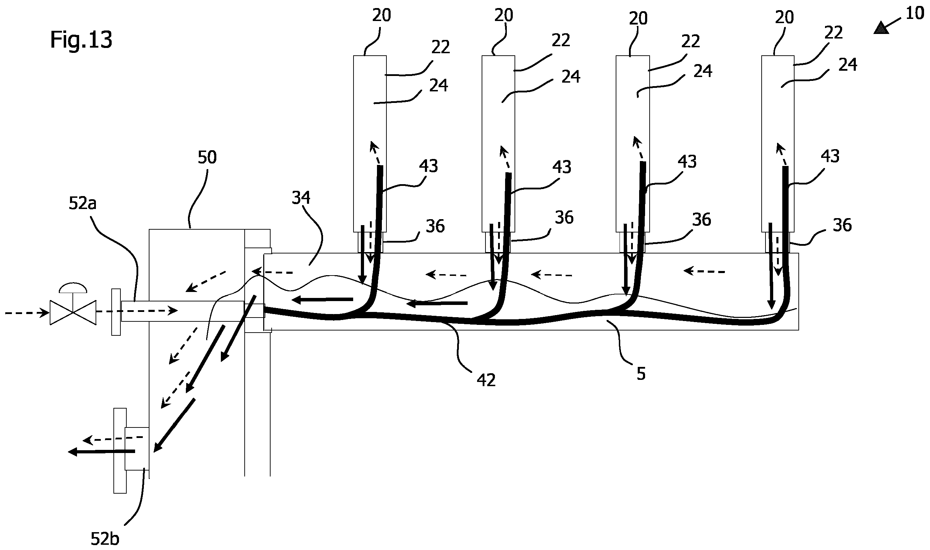

Gemäß Figur 13 ist eine zur Figur 11 ähnliche Vorrichtung 10 mit einem einseitigen Steuerkopf 50 dargestellt, wobei über einen ersten Anschluss 52a ein Austreibgas durch eine schlauchartige Zuleitung 42 als Teil der Gaszuführeinrichtung 40 innerhalb der Filtratableitung 34 über Einzelschläuche 43 in den jeweiligen Filtratraum 24 eines Filtersegmentes 22 eines Scheibenfilters 20 eingeleitet wird. Der Einzelschlauch 43 kann dabei weit ins Innere des Filtratraumes 24 hineinreichen, um so ein zuverlässiges Austreiben von Filtrat 5 von oben zu der jeweiligen Durchlassöffnung 36 in dem Filtersegment 22 zu bewirken. Entsprechend der Ausführung nach Figur 11 wird das Filtrat 5 mit entspanntem Austreibgas dann über den Steuerkopf 50 über einen zweiten Auslass 52b abgeführt. Die Schlauchführung kann grundsätzlich auch außerhalb der Filtrableitung 34 erfolgen und durch gedichtete Einzeldurchtritte von außen in die Durchlassöffnungen 36 oder Filtersegmente 22 realisiert werden (z.B. mit Steckverbindungen).

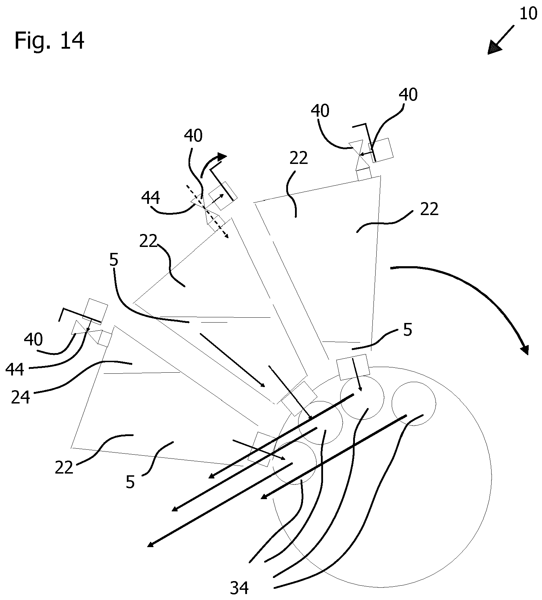

Eine weitere mögliche Ausführungsvariante einer erfindungsgemäßen Vorrichtung 10 zum Filtrieren ist schematisch in Figur 14 gezeigt, wobei jeweils an einem Filtersegment 22 am Außenumfang eine Gaszuführeinrichtung 40 mit einem Stellventil 44 angeordnet ist. Hiermit kann gesteuert abhängig von der Winkellage des jeweiligen Filtersegmentes 22 Gas unter Druck von außen in den Filtratraum 24 eingeleitet werden. Hierdurch kann im Filtratraum 24 befindliches Filtrat 5 nach unten zum jeweiligen Filtratrohr hin effizient ausgetragen werden.

## Patentansprüche

1. Verfahren zum Filtern einer Suspension mit mindestens einem rotierenden Scheibenfilter (20), welcher eine Mehrzahl von Filtersegmenten (22) aufweist, welche jeweils einen inneren Filtratraum (24) umfassen und an einer Filterwelle (30) mit mindestens einer Filtratableitung (34) angebracht sind, welche leitungsverbunden mit den Filtraträumen (24) der Filtersegmente (22) ist, wobei mindestens ein Scheibenfilter (20) mit den Filtersegmenten (22) zumindest einen Trog (12) mit der Suspension durchläuft und aufgrund einer anliegenden Druckdifferenz ein Filterkuchen an einem Filtermedium (26) der Filtersegmente (22) anfiltriert wird, wobei Filtrat (5) in die Filtraträume (24) der Filtersegmente (22) gelangt und über mindestens eine Filtratableitung (34) an der Filterwelle (30) abgeführt wird, und anschließend der anfiltrierte Filterkuchen auf dem mindestens einem Scheibenfilter (20) eine Entfeuchtungszone durchläuft,
**dadurch gekennzeichnet,**
**dass** nach dem Anfiltrieren des Filterkuchens und vor und/oder während des Entfeuchtens des Filterkuchens in den Filtratraum (24) des jeweiligen Filtersegmentes (22) mittels einer steuerbaren Gaszuführeinrichtung (40) definiert ein Austreibgas eingeleitet wird, durch welches ein Austreiben des Filtrates (5) aus dem Filtratraum (24) des Filtersegmentes (22) in die mindestens eine Filtratableitung (34) unterstützt wird.

2. Verfahren nach Anspruch 1,
**dadurch gekennzeichnet,**
**dass** nach dem Durchlaufen der Entfeuchtungszone in den jeweiligen Filtratraum (24) ein Ausstoßgas unter Druck eingeleitet wird, wobei der anfiltrierte Filterkuchen von dem Filtermedium (26) gelöst und abgeblasen wird.

3. Verfahren nach Anspruch 2,
**dadurch gekennzeichnet,**
**dass** das Austreibgas und das Ausstoßgas gleich sind und insbesondere Luft verwendet wird.

4. Verfahren nach einem der Ansprüche 1 bis 3,
**dadurch gekennzeichnet,**
**dass** das Austreibgas kontinuierlich über die Zeitdauer des Austreibens des Filtrats (5) in den jeweiligen Filtratraum (24) eingeleitet wird.

5. Verfahren nach einem der Ansprüche 1 bis 3,
**dadurch gekennzeichnet,**
**dass** das Austreibgas zu Beginn des Austreibens in den jeweiligen Filtratraum (24) für eine Zeitspanne eingeleitet wird, welche kürzer als die Zeitdauer des Austreibens ist.

6. Verfahren nach Anspruch 5,
**dadurch gekennzeichnet,**
**dass** die Zeitspanne dadurch begrenzt wird, dass Filtrat (5) in dem jeweiligen Filtratraum (24) eine Zuführöffnung (36) für das Austreibgas ausfüllt. und dadurch die Zufuhr von Austreibgas erheblich behindert wird.

7. Verfahren nach einem der Ansprüche 1 bis 6,
**dadurch gekennzeichnet,**
**dass** bei einem Rotieren des Scheibenfilters (20) im Uhrzeigersinn ein Austreiben von Filtrat (5) aus einem Filtersegment (22) zwischen einer 8-Uhr-Position und einer 12-Uhr-Position des jeweiligen Filtersegmentes (22) erfolgt.

8. Verfahren nach einem der Ansprüche 1 bis 7,
**dadurch gekennzeichnet,**
**dass** das Austreibgas über eine getrennte Zuführleitung (42) oder über mindestens eine Filtratableitung (34) in das Filtersegment (22) eingeleitet wird.

9. Verfahren nach einem der Ansprüche 1 bis 8,
**dadurch gekennzeichnet,**
**dass** ein Austreibdruck (p₃) in dem Filtersegment (22) zum Austreiben des Filtrats (5) größer als ein Filtrationsdruck (p₁) und Entfeuchtungsdruck (p₂) in dem Filtersegment (22) ist.

10. Vorrichtung zum Filtern einer Suspension mit mindestens einem rotierenden Scheibenfilter (20), welcher eine Mehrzahl von Filtersegmenten (22) aufweist, welche jeweils einen inneren Filtratraum (24) umfassen und an einer Filterwelle (30) mit mindestens einer Filtratableitung (34) angebracht sind, welche leitungsverbunden mit den Filtraträumen (24) der Filtersegmente (22) ist, wobei die Vorrichtung (10) derart ausgebildet ist, dass mindestens ein Scheibenfilter (20) mit den Filtersegmenten (22) zunächst einen Trog (12) mit einer Suspension durchläuft und aufgrund einer anliegenden Druckdifferenz ein Filterkuchen an einem Filtermedium (26) der Filtersegmente (22) anfiltriert wird, wobei Filtrat (5) in die Filterräume (24) der Filtersegmente (22) gelangt und über die mindestens eine Filtratableitung (34) an der Filterwelle (30) abgeführt wird, und anschließend der anfiltrierte Filterkuchen auf mindestens einem Scheibenfilter (20) eine Entfeuchtungszone durchläuft,
**dadurch gekennzeichnet,**
**dass** eine steuerbare Gaszuführeinrichtung (40) vorgesehen ist, mit welcher nach dem Anfiltrieren des Filterkuchens und vor und/oder während des Entfeuchtens des Filterkuchens in den Filtratraum (24) des jeweiligen Filtersegmentes (22) definiert ein Austreibgas einleitbar ist, durch welches ein Austreiben des Filtrats (5) aus dem Filtratraum (24) des Filtersegmentes (22) in die Filtratableitung (34) unterstützt ist, zum Durchführen eines Verfahrens nach einem der Ansprüche 1 bis 9.

11. Vorrichtung nach Anspruch 10,
**dadurch gekennzeichnet,**
**dass** an zumindest einem Endbereich der Filterwelle (30) ein Steuerkopf (50) zur Abführung von Filtrat (5) und/oder einer Zu- und/oder Abführung von Gas angeordnet ist.

## Claims

1. Method for filtering a suspension with at least one rotating disc filter (20) which comprises a plurality of filter segments (22) which each comprise an inner filtrate space (24) and are attached to a filter shaft (30) with at least one filtrate discharge line (34) which is in line connection with the filtrate spaces (24) of the filter segments (22), wherein at least one disc filter (20) with the filter segments (22) passes through at least one trough (12) with the suspension and, on account of a prevailing pressure difference, a filter cake is filtrated at a filter medium (26) of the filter segments (22), wherein filtrate (5) enters the filtrate spaces (24) of the filter segments (22) and is discharged at the filter shaft (30) via at least one filtrate discharge line (34), and subsequently the filtrated filter cake passes through a dehumidification zone on the at least one disc filter (20),
**characterised in that**
after the filtration of the filter cake and before and/or during the dehumidification of the filter cake an expelling gas is introduced into the filtrate space (24) of the respective filter segment (22) in a defined manner by means of a controllable gas supply device (40), by means of which an expulsion of the filtrate (5) out of the filter space (24) of the filter segment (22) and into the at least one filtrate discharge line (34) is assisted.

2. Method according to claim 1,
**characterised in that**
after passing through the dehumidification zone into the respective filtrate space (24) an ejection gas is introduced under pressure, wherein the filtrated filter cake is released from the filter medium (26) and blown off.

3. Method according to claim 2,
**characterised in that**
the expelling gas and the ejection gas are the same and in particular air is used.

4. Method according to any one of claims 1 to 3,
**characterised in that**
the expelling gas is introduced into the respective filtrate space (24) continuously over the time duration of expelling the filtrate (5).

5. Method according to any one of claims 1 to 3,
**characterised in that**
the expelling gas is introduced, at the start of the expulsion, into the respective filtrate space (24) for a time period that is shorter than the time duration of the expulsion.

6. Method according to claim 5,
**characterised in that**
the time period is limited **in that** the filtrate (5) in the respective filtrate space (24) fills a supply opening (36) for the expelling gas, and thereby the supply of expelling gas is significantly impeded.

7. Method according to any one of claims 1 to 6,
**characterised in that**
in the case of a rotation of the disc filter (20) in the clockwise direction, filtrate (5) is expelled from a filter segment (22) between an 8 o'clock position and a 12 o'clock position of the respective filter segment (22).

8. Method according to any one of claims 1 to 7,
**characterised in that**
the expelling gas is introduced into the filter segment via a separate supply line (42) or via at least one filtrate discharge line (34).

9. Method according to any one of claims 1 to 8,
**characterised in that**
an expulsion pressure (p₃) in the filter segment (22) for expelling the filtrate (5) is greater than a filtration pressure (p₁) and dehumidification pressure (p₂) in the filter segment (22).

10. Device for filtering a suspension, having at least one rotating disc filter (20) which comprises a plurality of filter segments (22) which each comprise an inner filtrate space (24) and are attached to a filter shaft (30) with at least one filtrate discharge line (34) which is in line connection with the filtrate spaces (24) of the filter segments (22), wherein the device (10) is configured such that at least one disc filter (20) with the filter segments (22) first passes through a trough (12) with a suspension and, on account of a prevailing pressure difference, a filter cake is filtrated at a filter medium (26) of the filter segments (22), wherein filtrate (5) enters the filtrate spaces (24) of the filter segments (22) and is discharged at the filter shaft (30) via the at least one filtrate discharge line (34), and subsequently the filtrated filter cake passes through a dehumidification zone on at least one disc filter (20),
**characterised in that**
a controllable gas supply device (40) is provided, via which an expelling gas can be introduced into the filtrate space (24) of the respective filter segment (22) in a defined manner after filtration of the filter cake and before and/or during dehumidification of the filter cake, by means of which gas an expulsion of the filtrate (5) out of the filter space (24) of the filter segment (22) and into the filtrate discharge line (34) is assisted, for carrying out a method according to any one of claims 1 to 9.

11. Device according to claim 10,
**characterised in that**
a control head (50) for discharging filtrate (5) and/or a gas supply and/or discharge is arranged on at least one end region of the filter shaft (30).

## Revendications

1. Procédé pour filtrer une suspension avec au moins un filtre à disques rotatif (20) qui présente une pluralité de segments de filtre (22) qui comprennent chacun un espace de filtrat intérieur (24) et sont montés sur un arbre de filtre (30) avec au moins une conduite d'évacuation de filtrat (34) qui est relié de manière conductrice aux espaces de filtrat (24) des segments de filtre (22), au moins un filtre à disques (20) avec les segments de filtre (22) traversant au moins une cuve (12) contenant la suspension et, en raison d'une différence de pression appliquée, un gâteau de filtration se formant sur un milieu filtrant (26) des segments de filtre (22), le filtrat (5) parvenant dans les espaces de filtrat (24) des segments de filtre (22) et étant évacué par l'intermédiaire d'au moins une conduite d'évacuation de filtrat (34) sur l'arbre de filtre (30), et ensuite le gâteau de filtration formé sur l'au moins un filtre à disques (20) traversant une zone de déshumidification,
**caractérisé en ce qu'**
après la formation du gâteau de filtration et avant et/ou pendant la déshumidification du gâteau de filtration, un gaz d'expulsion est introduit de manière définie dans l'espace de filtrat (24) du segment de filtre respectif (22) au moyen d'un appareil d'amenée de gaz commandable (40), par lequel une expulsion du filtrat (5) de l'espace de filtrat (24) du segment de filtre (22) vers l'au moins une conduite d'évacuation de filtrat (34) est favorisée.

2. Procédé selon la revendication 1,
**caractérisé en ce qu'**
après la traversée de la zone de déshumidification, un gaz d'éjection est introduit sous pression dans l'espace de filtrat respectif (24), le gâteau de filtration formé étant détaché du milieu filtrant (26) et évacué par soufflage.

3. Procédé selon la revendication 2,
**caractérisé en ce que**
le gaz d'expulsion et le gaz d'éjection sont identiques et de l'air est notamment utilisé.

4. Procédé selon l'une quelconque des revendications 1 à 3,
**caractérisé en ce que**
le gaz d'expulsion est introduit en continu dans l'espace de filtrat respectif (24) pendant toute la durée de l'expulsion du filtrat (5).

5. Procédé selon l'une quelconque des revendications 1 à 3,
**caractérisé en ce que**
le gaz d'expulsion est introduit au début de l'expulsion dans l'espace de filtrat respectif (24) pendant une période de temps qui est plus courte que la durée de l'expulsion.

6. Procédé selon la revendication 5,
**caractérisé en ce que**
la période de temps est limitée par le fait que le filtrat (5) remplit une ouverture d'amenée (36) pour le gaz d'expulsion dans l'espace de filtrat respectif (24), et l'amenée de gaz d'expulsion est ainsi considérablement entravée.

7. Procédé selon l'une quelconque des revendications 1 à 6,
**caractérisé en ce que**,
lors d'une rotation du filtre à disques (20) dans le sens horaire, une expulsion de filtrat (5) d'un segment de filtre (22) entre une position 8 heures et une position 12 heures du segment de filtre respectif (22) est effectuée.

8. Procédé selon l'une quelconque des revendications 1 à 7,
**caractérisé en ce que**
le gaz d'expulsion est introduit dans le segment de filtre (22) par l'intermédiaire d'une conduite d'amenée séparée (42) ou par l'intermédiaire d'au moins une conduite d'évacuation de filtrat (34).

9. Procédé selon l'une quelconque des revendications 1 à 8,
**caractérisé en ce qu'**
une pression d'expulsion (p₃) dans le segment de filtre (22) pour expulser le filtrat (5) est supérieure à une pression de filtration (p₁) et à une pression de déshumidification (p₂) dans le segment de filtre (22).

10. Dispositif pour filtrer une suspension, avec au moins un filtre à disques rotatif (20) qui présente une pluralité de segments de filtre (22) qui comprennent chacun un espace de filtrat intérieur (24) et sont montés sur un arbre de filtre (30) avec au moins une conduite d'évacuation de filtrat (34) qui est reliée de manière conductrice aux espaces de filtrat (24) des segments de filtre (22), le dispositif (10) étant réalisé de telle sorte qu'au moins un filtre à disques (20) avec les segments de filtre (22) traverse d'abord une cuve (12) contenant une suspension et, en raison d'une différence de pression appliquée, un gâteau de filtration se forme sur un milieu filtrant (26) des segments de filtre (22), le filtrat (5) parvenant dans les espaces de filtre (24) des segments de filtre (22) et étant évacué par l'intermédiaire de l'au moins une conduite d'évacuation de filtrat (34) sur l'arbre de filtre (30), et ensuite, le gâteau de filtration formé sur au moins un filtre à disques (20) traversant par une zone de déshumidification,
**caractérisé en ce qu'**
il est prévu un appareil d'amenée de gaz commandable (40) avec lequel, après la formation du gâteau de filtration et avant et/ou pendant la déshumidification du gâteau de filtration, un gaz d'expulsion peut être introduit de manière définie dans l'espace de filtrat (24) du segment de filtre respectif (22), par lequel une expulsion du filtrat (5) de l'espace de filtrat (24) du segment de filtre (22) vers la conduite d'évacuation de filtrat (34) est favorisée, pour la mise en œuvre d'un procédé selon l'une quelconque des revendications 1 à 9.

11. Dispositif selon la revendication 10,
**caractérisé en ce qu'**
une tête de commande (50) est agencée au moins au niveau d'une zone d'extrémité de l'arbre de filtre (30) pour évacuer le filtrat (5) et/ou pour amener et/ou évacuer du gaz.
